# EUROPÄISCHE PATENTSCHRIFT

(11) **EP 1 134 246 B1**
(45) Veröffentlichungstag und Bekanntmachung des Hinweises auf die Patenterteilung: **26.09.2012**
(21) Anmeldenummer: 01105546.4
(22) Anmeldetag: 06.03.2001
(51) Int. Cl.: C08G 18/72, C08G 18/80

(54) **Polyisocyanate**
Polyisocyanate
Polyisocyanate

(30) Priorität: 17.03.2000 DE 10013186
(43) Veröffentlichungstag der Anmeldung: 19.09.2001
(73) Patentinhaber: BASF SE, 67056 Ludwigshafen (DE)
(72) Erfinder: Bruchmann, Bernd, Dr., 67251 Freinsheim (DE); Renz, Hans, Dr., 67149 Meckenheim (DE); Königer, Rainer, Dr., 68199 Mannheim (DE); Ehe, Ulrike, 67245 Lambsheim (DE); Treuling, Ulrich, Dr., 64625 Bensheim (DE); Müller-Mall, Rudolf, Dr., 67141 Neuhofen (DE)

(56) Entgegenhaltungen:
- EP-A- 0 150 444
- EP-A- 1 054 030
- EP-A1- 0 845 492
- EP-A2- 0 752 433
- EP-A2- 0 754 713
- EP-A2- 1 055 691
- EP-A2- 1 055 692
- GB-A- 2 313 839

## Beschreibung

Die vorliegende Erfindung betrifft Polyisocyanate auf Basis von zwei verschiedenen Di- bzw. Di- oder Polyisocyanaten, sowie ein Verfahren zu ihrer Herstellung.

Im allgemeinen können Polyisocyanate u.a. als Bausteine zur Polyurethanherstellung, z.B. zur Herstellung von Lacken, Überzügen, Klebstoffen, Dichtmassen, Gießelastomeren oder Schaumstoffen technisch vorteilhaft eingesetzt werden.

Polyisocyanate auf Basis von unterschiedlichen Diisocyanaten oder Diisocyanaten und Polyisocyanaten können für vorstehend genannte Zwecke besonders vorteilhaft verwendet werden, sie sind jedoch kommerziell nur eingeschränkt verfügbar.

So beschreibt EP-A-755 954 die Cotrimerisierung von Toluylendiisocyanat (TDI) und Hexamethylendiisocyanat (HDI), um ein Isocyanuratgruppen enthaltendes Polyisocyanat-Gemisch für die Herstellung von Polyurethan-Lacken zu erhalten. Dieses Produkt soll die positiven Eigenschaften der beiden Isocyanate in PU-Lacksystemen, hohe Reaktivität und Härte des aromatischen Isocyanats und Lichtstabilität und Chemikalienresistenz des aliphatischen Isocyanats, vereinen. Aufgrund der großen Reaktivitätsunterschiede der aromatisch und der aliphatisch gebundenen NCO-Gruppen der Edukte wird hier jedoch ein sehr uneinheitliches Produktgemisch erhalten, das hauptsächlich aus den Homotrimerisaten des Toluylendiisocyanats und des Hexamethylendiisocyanats und nur zu geringen Anteilen aus deren Cotrimerisaten besteht. Die Reaktion wird nur bis zu einem Teilumsatz gefahren, nicht abreagierte Diisocyanate werden anschließend destillativ im Vakuum aus dem Reaktionsgemisch entfernt.

EP-A-47452 beschreibt die Mischtrimerisierung von Hexamethylendiisocyanat und Isophorondiisocyanat (IPDI). Da die Reaktivitäten der NCO-Gruppen von HDI und IPDI nicht sehr unterschiedlich sind, gelingt hier die Cotrimerisierung, es wird jedoch ein OligomerenGemisch mit statistischer HDI / IPDI-Produktverteilung erhalten. Nach der Reaktion wird auch hier nicht umgesetztes Diisocyanat per Vakuumdestillation aus dem Reaktionsgemisch entfernt.

Der Erfindung lag daher die Aufgabe zugrunde, Polyisocyanate bereitzustellen, die aufgrund ihres definierten Aufbaus vorteilhafte Eigenschaften, wie hohe Reaktivität, geringe Viskosität und gute Löslichkeit, in sich vereinen und die verfahrenstechnisch einfach, d.h. möglichst ohne destillative Aufarbeitung, hergestellt werden können, sowie ein Verfahren zur Herstellung dieser Polyisocyanate.

Die Aufgabe konnte erfindungsgemäß gelöst werden, indem ein Additionsprodukt (A) und/oder ein Polyadditionsprodukt (P), das durch Umsetzung eines Diisocyanats I mit einer mit Isocyanat reaktiven Verbindung erhältlich ist und eine mit Isocyanat reaktive Gruppe und eine Isocyanatgruppe aufweist, mit einem Di- oder Polyisocyanat II, wobei das Di- oder Polyisocyanat II von Diisocyanat I verschieden ist, umgesetzt wird.

Ein Gegenstand der Erfindung ist somit ein Verfahren zur Herstellung von Polyisocyanaten, umfassend
(i) Herstellen eines Additionsproduktes (A), das eine mit Isocyanat reaktive Gruppe und eine Isocyanatgruppe enthält, durch Umsetzen eines
   (a) Diisocyanats I mit
   (b) Verbindungen mit zwei mit Isocyanat reaktiven Gruppen, wobei mindestens eine der Komponenten (a) oder (b) funktionelle Gruppen mit gegenüber den funktionellen Gruppen der anderen Komponente unterschiedlicher Reaktivität aufweist,
(ii) gegebenenfalls intermolekulare Additionsreaktion des Additionsprodukts (A) zu einem Polyadditionsprodukt (P), das eine mit Isocyanat reaktive Gruppe und eine Isocyanatgruppe enthält und
(iii) Umsetzen des Additionsproduktes (A) und/oder des Polyadditionsproduktes (P) mit einem Di- oder Polyisocyanat II, wobei Diisocyanat I und Di- oder Polyisocyanat II verschieden sind und aromatisches Isocyanat in Kombination mit aliphatischem Isocyanat oder cycloaliphatises Isocyanat in Kombination mit aliphatischem Isocyanat eingesetzt wird.

Ein weiterer Gegenstand der Erfindung sind die nach diesem Verfahren hergestellten Polyisocyanate.

Ein Gegenstand der Erfindung ist ferner die Verwendung der erfindungsgemäßen Polyisocyanate als Bausteine zur Herstellung von Lacken, Überzügen, Klebstoffen, Dichtmassen, Gießelastomeren oder Schaumstoffen und Polyadditionsprodukte, erhältlich unter Verwendung der erfindungsgemäßen Polyisocyanate.

Als Diisocyanate I kommen die aus dem Stand der Technik bekannten aliphatischen, cycloaliphatischen und aromatischen Isocyanate in Frage. Bevorzugte Diisocyanate I sind 4,4'-Diphenylmethandiisocyanat, Tetramethylendiisocyanat, Hexamethylendiisocyanat, 4,4'-Methylenbis(cyclohexyl)-diisocyanat, Xylylendiisocyanat, Tetramethylxylylendiisocyanat, Dodecyldiisocyanat, 1,3- und 1,4-Bis(isocyanatomethyl)cyclohexan, Lysinalkylester-diisocyanat, wobei Alkyl für C₁ bis C₁₀ steht, 2,2,4- oder 2,4,4-Trimethyl-1,6-hexamethylen-diisocyanat oder 1,4-Diisocyanatocyclohexan.

Besonders bevorzugt sind Diisocyanate mit NCO-Gruppen unterschiedlicher Reaktivität, wie 2,4-Toluylendiisocyanat (2,4-TDI), 2,4'-Diphenylmethandiisocyanat (2,4'-MDI), Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexylisocyanat, 1,4-Diisocyanato-4-methylpentan, 2,4'-Methylen-bis(cyclohexyl)diisocyanat und 4-Methyl-cyclohexan-1,3-diisocyanat (H-TDI).

Weiterhin sind Diisocyanate besonders bevorzugt, deren NCO-Gruppen zunächst gleich reaktiv sind, bei denen sich jedoch durch Erstaddition eines Alkohols oder Amins an einer NCO-Gruppe ein Reaktivitätsabfall bei der zweiten NCO-Gruppe induzieren läßt. Beispiele dafür sind Isocyanate, deren NCO-Gruppen über ein delokalisiertes Elektronensystem gekoppelt sind, z.B. 1,3- und 1,4-Phenylendiisocyanat, 1,5-Naphthylendiisocyanat, Diphenyldiisocyanat, Tolidindiisocyanat oder 2,6-Toluylendiisocyanat.

Als Di- und Polyisocyanate II kommen alle aus dem Stand der Technik bekannten aliphatischen, cycloaliphatischen und aromatischen Isocyanate in Frage. Neben den oben genannten Di- und Polyisocyanaten können weiterhin beispielsweise Oligo- oder Polyisocyanate verwendet werden, die sich aus den genannten Diisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Als Di- und Polyisocyanate II werden besonders bevorzugt verwendet 4,4'-Diphenylmethandiisocyanat, Mischungen aus Diphenylmethandiisocyanaten und oligomeren Diphenylmethandiisocyanaten (Polymer-MDI), 1,3- und 1,4-Phenylendiisocyanat, Isophorondiisocyanat, Isocyanurat-, Uretdion-, Urethan- oder Allophanatgruppen aufweisende Oligomere aus Isophorondiisocyanat, Hexamethylendiisocyanat, Isocyanurat-, Uretdion-, Urethan-, Allophanat-, Iminooxadiazindion- oder Biuretgruppen aufweisende Oligomere aus Hexamethylendiisocyanat, 4-Isocyanatomethyl-1,8-octamethylendi-isocyanat, Urethan-, Allophanat-, Carbodiimid- oder Uretonimingruppen aufweisende Oligomere aus MDI oder Urethan-, Allophanat-, Carbodiimid- oder Uretonimingruppen aufweisende Oligomere aus TDI.

Im allgemeinen weisen die eingesetzten Di- und Polyisocyanate II eine mittlere Funktionalität von mindestens 2, insbesondere 2 bis 8 auf. In einer bevorzugten Ausführungsform werden als Di- oder Polyisocyanate II Isocyanate mit einer mittleren Funktionalität von mehr als 2, bevorzugt 2,1 bis 5 verwendet.

Sowohl für die Diisocyanate I als auch für die Di- und Polyisocyanate II können auch Mischungen der genannten Isocyanate verwendet werden.

Die bei der Herstellung des Additionsproduktes (A) verwendeten Verbindungen (b) mit zwei mit Isocyanat reaktiven Gruppen sind aus Verbindungen ausgewählt, die Hydroxylgruppen, Mercaptogruppen oder Aminogruppen aufweisen. Bevorzugt sind Hydroxylgruppen und Aminogruppen.

Ebenfalls können zur Herstellung des Additionsprodukts (A) Verbindungen (b) mit zwei mit Isocyanat reaktiven Gruppen verwendet werden, die aus den oben genannten funktionellen Gruppen oder Gemischen davon ausgewählt sind und deren funktionelle Gruppen gegenüber NCO-Gruppen eine unterschiedliche Reaktivität aufweisen. Bevorzugt sind dabei Verbindungen mit einer primären und einer sekundären oder tertiären Hydroxylgruppe, einer Hydroxylgruppe und einer Mercaptogruppe oder einer Hydroxylgruppe und einer Aminogruppe im Molekül, da die Reaktivität der Aminogruppe gegenüber der Hydroxylgruppe bei der Umsetzung mit Isocyanat deutlich höher ist.

Weiterhin bevorzugt sind mit Isocyanat reaktive Verbindungen, deren mit Isocyanat reaktive funktionellen Gruppen zunächst gleich reaktiv sind, bei denen sich jedoch durch Addition mindestens eines Isocyanates ein Reaktivitätsabfall, bedingt durch sterische oder elektronische Einflüsse, bei der zweiten mit Isocyanat reaktiven Gruppe induzieren läßt.

Beispiele für (b) Verbindungen mit zwei mit Isocyanat reaktiven Gruppen sind Ethylenglykol, Diethylenglykol, Triethylenglykol, 1,2- und 1,3-Propandiol, Neopentylglykol, 1,2-, 1,3- und 1,4-Butandiol, 1,2-, 1,3- und 1,5-Pentandiol, Hexandiol, Propan-1,2-dithiol, Butan-1,2-dithiol, Mercaptoethanol, Mercaptopropanol, Mercaptobutanol, Ethylendiamin, Toluylendiamin, Isophorondiamin, Cysteamin, Ethanolamin, N-Methylethanolamin, Propanolamin, Isopropanolamin, 2-(Butylamino)ethanol, 2-(Cyclo-hexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Aminopropanthiol oder difunktionelle Polyether- oder Polyesterole. Dabei sind 1,2-Propandiol, 1,2- und 1,3-Butandiol, Ethanolamin, Propanolamin, Mercaptoethanol, 4-Hydroxypiperidin und 1-Hydroxyethylpiperazin besonders bevorzugt.

Weiterhin sind auch Mischungen der genannten Verbindungen einsetzbar.

Bei der Herstellung des Additionsprodukts (A) ist es notwendig, das Verhältnis von Diisocyanat I zu (b) Verbindungen mit zwei mit Isocyanat reaktiven Gruppen äquimolar einzustellen, so dass das resultierende Additionsprodukt (A) eine mit Isocyanat reaktive Gruppe und eine freie NCO-Gruppen enthält.

Die Umsetzung zum Additionsprodukt (A) findet üblicherweise bei einer Temperatur von -20 bis 120°C, bevorzugt bei -15 bis 100°C statt. In einer bevorzugten Ausführungsform wird das Diisocyanat I vorgelegt und die Verbindung (b) zugegeben. Die Additionsprodukte (A) sind üblicherweise nicht über einen längeren Zeitraum stabil und werden daher bevorzugt anschließend mit dem Di- oder Polyisocyanat II umgesetzt.

In einer bevorzugten Ausführungsform kann das Additionsprodukt (A) durch eine intermolekulare Additionsreaktion des Additionsproduktes (A) in ein Polyadditionsprodukt (P) überführt werden. Hierbei addiert sich die mit Isocyanat reaktive Gruppe des Additionsproduktes (A) an die Isocyanatgruppe eines weiteren Additionsproduktes (A). Die Anzahl der Additionsprodukte (A), die sich zu einem Polyadditionsprodukt (P) addieren, ist im allgemeinen nicht beschränkt. Aus praktischen Gesichtspunkten wird üblicherweise die Additionsreaktion abgebrochen, bevor das Polyadditionsprodukt (P), z.B. aufgrund eines zu hohen Molekulargewichts oder aus sterischen Gründen, nachteilige Eigenschaften, wie beispielsweise eine zu hohe Viskosität oder eine zu schlechte Löslichkeit, aufweist.

Die resultierenden Polyadditionsprodukte (P) weisen eine mit Isocyanat reaktive Gruppe und eine Isocyanatgruppe auf.

Die intermolekulare Polyadditionsreaktion eines Additionsproduktes (A) zu einem Polyadditionsprodukt (P) kann üblicherweise in situ nach Beendigung der Reaktion zu dem Additionsprodukt (A) durch eine Temperaturerhöhung durchgeführt werden.

Weiterhin kann auch ein geeigneter Katalysator oder ein geeignetes Katalysatorgemisch zugegeben werden. Geeignete Katalysatoren sind im allgemeinen Verbindungen, die Urethan-Reaktionen katalysieren, zum Beispiel Amine, Ammoniumverbindungen, Aluminium-, Zinn-, Titan-, Zirkon- oder Wismut-organische Verbindungen.

Beispielsweise können genannt werden Diazabicyclooctan (DABCO), Diazabicyclononen (DBN) und Diazabicycloundecen (DBU), Titantetrabutylat, Dibutylzinn-dilaurat, Zirkon-acetylacetonat oder Gemische davon.

Die Zugabe des Katalysators erfolgt im allgemeinen in einer Menge von 50 bis 10000, bevorzugt von 100 bis 5000 Gew. ppm bezogen auf die Menge des eingesetzten Isocyanats.

Ferner ist es auch möglich, sowohl durch Zugabe eines geeigneten Katalysators, als auch durch Wahl einer geeigneten Temperatur die intermolekulare Polyadditionsreaktion zu steuern.

Zum Abbruch der intermolekularen Polyadditionsreaktion gibt es verschiedene Möglichkeiten. Beispielsweise kann die Temperatur auf einen Bereich abgesenkt werden, in dem die Additionsreaktion zum Stillstand kommt und das Additionsprodukt (A) oder das Polyadditionsprodukt (P) lagerstabil ist.

In einer bevorzugten Ausführungsform wird, sobald aufgrund der intermolekularen Additionsreaktion des Additionsproduktes (A) ein Polyadditionsprodukt (P) mit gewünschten Polyadditionsgrad vorliegt, dem Polyadditionsprodukt (P) zum Abbruch der Polyadditionsreaktion ein Di- oder Polyisocyanat II zugegeben.

Durch Umsetzung des Polyadditionsprodukts (P) mit dem Di- oder Polyisocyanat II erhält man die erfindungsgemäßen Polyisocyanate.

Alternativ kann das Di- oder Polyisocyanat II auch zu einem Additionsprodukt (A) gegeben werden, das noch nicht in einer intermolekularen Additionsreaktion zu einem Polyadditionsprodukt (P) umgesetzt wurde.

Es ist jedoch zumeist technisch vorteilhaft, die intermolekulare Additionsreaktion zumindest in geringem Umfang durchzuführen, da gegebenenfalls im Additionsprodukt (A) noch geringe Mengen an nicht umgesetztem Diisocyanat I als Verunreinigung enthalten sein können und diese Verunreinigungen dann durch die intermolekulare Polyadditionsreaktion in das Polyadditionsprodukt (P) eingebaut werden können.

Die Umsetzung des Diisocyanats I mit (b) Verbindungen mit zwei mit Isocyanat reaktiven Gruppen erfolgt im allgemeinen äquimolar. Weiterhin ist es möglich, die mit Isocyanat reaktiven Komponente (b) im geringen molaren Überschuss einzusetzten, um eine möglichst vollständige Reaktion des Diisocyanates I zu erwirken. Vorteilhaft ist bei beiden Verfahresweisen, daß so eine eventuell aufwendige Abtrennung nicht umgesetzten Diisocyanates I entfällt.

Bei der Umsetzung des Additionsproduktes (A) und/oder des Polyadditionsprodukts (P) mit dem Di- oder Polyisocyanat II wird üblicherweise mindestens eine Isocyanatgruppe des Di- oder Polyisocyanats II mit der mit Isocyanat reaktiven Gruppe des Additionsprodukts (A) und/oder des Polyadditionsprodukts (P) zur Reaktion gebracht. In einer bevorzugten Ausführungsform werden mindestens 10 %, insbesondere mindestens 40 % und besonders bevorzugt 50 - 100 % der freien Isocyanatgruppen des Di- oder Polyisocyanats II mit einer entsprechenden Anzahl an Äquivalenten eines Additionsproduktes (A) und/oder Polyadditionsprodukts (P) zu dem erfindungsgemäßen Polyisocyanat umgesetzt.

In einer weiteren Ausführungsform wird zuerst eine Isocyanatgruppe eines Di- oder Polyisocyanats II mit einem Additionsprodukt (A1) oder einem Polyadditionsprodukt (P1) umgesetzt, anschließend wird mindestens eine weitere Isocyanatgruppe des Di- oder Polyisocyanats II mit einem Additionsprodukt (A2) oder einem Polyadditionsprodukt (P2) umgesetzt, wobei die Additionsprodukte (A1) und (A2) bzw. die Polyadditionsprodukte (P1) und (P2) nicht identisch sind. Für diese Ausführungsform wird vorzugsweise ein Di- oder Polyisocyanat II verwendet, das Isocyanatgruppen mit unterschiedlicher Reaktivität gegenüber den mit Isocyanat reaktiven Gruppen der Komponenten (A) und/oder (P) aufweist.

Die Herstellung der erfindungsgemäßen Polyisocyanate erfolgt zumeist in Lösungsmitteln. Dabei können im allgemeinen alle Lösungsmittel verwendet werden, die gegenüber den jeweiligen Edukten inert sind. Bevorzugt verwendet werden organische Lösungsmittel, wie zum Beispiel Diethylether, Tetrahydrofuran, Aceton, Butanon-2, Methylisobutylketon, Essigester, Butylacetat, Benzol, Toluol, Chlorbenzol, Xylol, Methoxyethylacetat, Methoxypropylacetat, Dimethylformamid, Dimethylacetamid oder Solventnaphtha.

Die Herstellung der erfindungsgemäßen Polyisocyanate erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Die durch das erfindungsgemäße Verfahren erhaltenen Polyisocyanate können bei Bedarf auch hydrophobiert, hydrophiliert oder umfunktionalisiert werden. Dazu können die NCO-terminierten Produkte z.B. mit Fettalkoholen, Fettaminen, Hydroxycarbonsäuren, Hydroxysulfonsäuren, Aminosäuren oder Acrylatgruppen enthaltenden Monoalkoholen, wie Hydroxyethylacrylat oder Hydroxyethylmethacrylat umgesetzt oder teilumgesetzt werden.

Die Isocyanatgruppen der erfindungsgemäßen Polyisocyanate können auch in verkappter Form vorliegen. Als Verkappungsmittel für Nco-Gruppen eignen sich zum Beispiel Oxime, Phenole, Imidazole, Triazole, Pyrazole, Pyrazolinone, Diketopiperazine, Caprolactam, Malonsäureester oder Verbindungen, wie sie genannt sind in den Veröffentlichungen von Z. W. Wicks, Prog. Org. Coat. 3 (1975), 73 - 99 und Prog. Org. Coat. 9 (1981), 3 - 28 sowie in Houben-Weyl, Methoden der Organischen Chemie, Band XIV/2, 61 ff., Georg Thieme Verlag, Stuttgart 1963.

Im Rahmen dieser Erfindung ist es möglich, die gewünschten Eigenschaften der erfindungsgemäßen Polyisocyanate durch gezielte Wahl der entsprechenden Edukte, insbesondere der Diisocyanate I bzw. Di- oder Polyisocyanate II, zu erhalten. So ist es mit den Polyisocyanaten der vorliegenden Erfindung möglich, positive Eigenschaften von üblichen aromatischen Isocyanaten mit positiven Eigenschaften von üblichen aliphatischen Isocyanaten zu verbinden oder auch die positiven Eigenschaften von üblichen aliphatischen Isocyanaten mit den positiven Eigenschaften von üblichen cycloaliphatischen Isocyanaten zu kombinieren.

Wird beispielsweise ein erfindungsgemäßes Polyisocyanat auf Basis von HDI-Isocyanurat-Oligomer als Di- oder Polyisocyanat II und TDI als Diisocyanat I hergestellt, so kann dieses Polyisocyanat-Molekül je nach Wahl der Menge des Isocyanats II sowohl aromatische als auch aliphatische NCO-Gruppen aufweisen, die sich in ihrer Reaktivität deutlich unterscheiden. Diese unterschiedlichen NCO-Reaktivitäten innerhalb eines Polyisocyanat-Moleküls können dann technisch vorteilhaft genutzt werden.

Wird beispielsweise ein erfindungsgemäßes Polyisocyanat auf Basis von HDI-Isocyanurat-Oligomer als Di- oder Polyisocyanat II und IPDI als Diisocyanat I hergestellt, so weist ein mit Hilfe dieses Polyisocyanats hergestellter PU-Lack sowohl Eigenschaften wie Elastizität und Flexibilität als auch Eigenschaften wie Härte, Kratzbeständigkeit und Chemikalienresistenz auf.

Ein weiterer Vorteil des erfindungsgemäßen Verfahren liegt in seiner Wirtschaftlichkeit. Sowohl die Umsetzung von Diisocyanat I zu einem Additionsprodukt (A) und/oder Polyadditionsprodukt (P) als auch die Reaktion von (A) oder (P) mit einem Di- oder Polyisocyanat II zu einen erfindungsgemäßen Polyisocyanat kann in einer Reaktionsvorrichtung und ohne Destillationsschritt erfolgen, was technisch und wirtschaftlich vorteilhaft ist.

Die vorliegende Erfindung soll anhand der nachfolgenden Beispiele näher erläutert werden.

### Beispiele

### Herstellung eines Additionsproduktes (A) aus IPDI und Ethanolamin mit einer mittleren OH- und NCO-Funktionalität von 1

1000 g IPDI wurden in 270 g Dimethylacetamid (DMAc) gelöst und unter Stickstoffbedeckung auf 0°C abgekühlt. Bei dieser Temperatur wurden unter gutem Rühren innerhalb 10 min 270 g Ethanolamin, gelöst in 1000 g DMAc, zugegeben und die Reaktionsmischung bei 0°C noch 30 min gerührt. Nach dieser Zeit wies das Reaktionsprodukt eines NCO-Gehaltes von 7,4 Gew.% und eine mittlere Funktionalität bezüglich NCO von 1 und bezüglich OH von 1 auf.

### Herstellung eines Polyadditionsproduktes (P) aus IPDI und Ethanolamin mit einem Polymeristionsgrad von 3 und einer mittleren OH- und NCO-Funktionalität von 1

1000 g IPDI wurden in 270 g Dimethylacetamid (DMAc) gelöst und unter Stickstoffbedeckung auf 0°C abgekühlt. Bei dieser Temperatur wurden unter gutem Rühren innerhalb 10 min 270 g Ethanolamin, gelöst in 1000 g DMAc, zugegeben und die Reaktionsmischung bei 0°C noch 30 min gerührt. Das Produktgemisch wurde anschließend auf 60°C erwärmt und 200 mg Dibutylzinn-dilaurat (DBTL) zugegeben. Der NCO-Gehalt der Mischung nahm mit dem Aufbau der Molmasse kontinuierlich ab. Bei einem NCO-Gehalt von 2,4 Gew.% wies das Produkt einen mittleren Polymerisationsgrad von 3 und eine mittlere Funktionalität bezüglich NCO von 1 und bezüglich OH von 1 auf.

### Herstellung eines Additionsproduktes (A) aus IPDI und 1,3-Butandiol mit einer mittleren OH- und NCO-Funktionalität von 1

1000 g IPDI wurden unter Stickstoffbedeckung in 1000 g Butylacetat bei Raumtemperatur (23°C) gelöst. 200 mg Dibutylzinndilaurat wurden zugesetzt und anschließend wurde unter starkem Rühren innerhalb 20 min eine Mischung aus 405 g 1,3-Butandiol und 405 g Butylacetat zugegeben. Die Reaktionsmischung wurde bei Raumtemperatur gerührt und die Abnahme des NCO-Gehaltes titrimetrisch verfolgt. Bei einem NCO-Gehalt von 6,7 Gew.% wies das Reaktionsprodukt eine mittlere Funktionalität bezüglich NCO von 1 und bezüglich OH von 1 auf.

### Herstellung eines Polyadditionsproduktes (P) aus TDI und Ethanolamin mit einem Polymerisationsgrad von 7 und einer mittleren OH- und NCO-Funktionalität von 1

174 g (1 mol) TDI wurden in 522 g getrocknetem Dimethylacetamid (DMAc) gelöst und auf -15°C abgekühlt. Bei dieser Temperatur wurden 61 g (1 mol) Ethanolamin, gelöst in 183 g getrocknetem DMAc, unter gutem Rühren innerhalb lh zugetropft. Das Produktgemisch wurde unter Rühren langsam auf Raumtemperatur (23°C) erwärmt, während der NCO-Gehalt der Mischung mit dem Aufbau der Molmasse kontinuierlich abnahm. Bei einem NCO-Gehalt von 0.64 % wies das Reaktionsprodukt einen mittleren Polymerisationsgrad von 7 und eine mittlere Funktionalität bezüglich OH und NCO von 1 auf.

### Beispiel 1:

### Herstellung eines Polyisocyanats aus IPDI, Ethanolamin und HDI-Polyisocyanat mit einer mittleren NCO-Funktionalität von 3,7

Dem Additionsprodukt (A) aus Beispiel 1 wurden direkt nach der Herstellung 1700 g BASONAT HI 100, gelöst in 1700 g DMAc, und 400 mg Dibutylzinn-dilaurat zugesetzt, die Mischung auf 40°C erwärmt und 3 h bei dieser Temperatur gerührt. Das Endprodukt wies einen NCO-Gehalt von 6,0 Gew.% und eine Viskosität von 170 mPas, gemessen bei 25°C, auf. Die mittlere Molmasse des Polyisocyanats betrug 1457 g/mol, die mittlere Funktionalität betrug 3,7.

BASONAT^{®} HI 100, BASF: HDI-Polyisocyanat, Viskosität ca. 3200 mPas, Festgehalt = 100 %, NCO-Gehalt = 22 Gew.%.

### Beispiel 2:

### Herstellung eines Polyisocyanats aus IPDI, 1,3-Butandiol und HDI-Polyisocyanat mit einer mittleren NCO-Funktionalität von 3,7

Dem Additionsprodukt (A) aus Beispiel 3 wurden direkt nach der Herstellung 1720 g BASONAT HI 100, gelöst in 1720 g Butylacetat, zugesetzt, die Mischung auf 60°C erwärmt und 3 h bei dieser Temperatur gerührt. Das Endprodukt wies einen NCO-Gehalt von 6,0 Gew.% und eine Viskosität von 63 mPas, gemessen bei 25°C, auf. Die mittlere Molmasse des Polyisocyanats betrug 1544 g/mol, die mittlere Funktionalität betrug 3,7.

### Vergleichs-Beispiel 3:

### Herstellung eines Polyisocyanats aus IPDI, 1,3-Butandiol und Polymer-MDI mit einer mittleren NCO-Funktionalität von 2,5.

Dem Additionsprodukt (A) aus Beispiel 3 wurden direkt nach der Herstellung 1240 g LUPRANAT M 20 W, gelöst in 1240 g Butylacetat, und 0,2 g Dibutylzinn-dilaurat zugesetzt, die Mischung auf 60°C erwärmt und 3 h bei dieser Temperatur gerührt. Das Endprodukt wies einen NCO-Gehalt von 7,0 Gew.% und eine Viskosität von 45 mPas, gemessen bei 25°C, auf. Die mittlere Molmasse des Polyisocyanats betrug 905 g/mol, die mittlere Funktionalität betrug 2,5.

LUPRANAT® M 20 W, BASF: Polymer-MDI, Viskosität ca. 200 mPas (25°C), Festgehalt = 100 %, NCO-Gehalt = 31 Gew.%.

## Patentansprüche

1. Verfahren zur Herstellung von Polyisocyanaten, umfassend
(i) Herstellen eines Additionsproduktes (A), das eine mit Isocyanat reaktive Gruppe und eine Isocyanatgruppe enthält, durch Umsetzen eines
(a) Diisocyanats I mit
(b) Verbindungen mit zwei mit Isocyanat reaktiven Gruppen,
wobei mindestens eine der Komponenten (a) oder (b) funktionelle Gruppen mit gegenüber den funktionellen Gruppen der anderen Komponente unterschiedlicher Reaktivität aufweist,
(ii) gegebenenfalls intermolekulare Additionsreaktion des Additionsprodukts (A) zu einem Polyadditionsprodukt (P), das eine mit Isocyanat reaktive Gruppe und eine Isocyanatgruppe enthält und
(iii) Umsetzen des Additionsproduktes (A) und/oder des Polyadditionsproduktes (P) mit einem Di- oder Polyisocyanat II,
wobei Diisocyanat I und Di- oder Polyisocyanat II verschieden sind und aromatisches Isocyanat in Kombination mit aliphatischem Isocyanat oder cycloaliphatisches Isocyanat in Kombination mit aliphatischem Isocyanat eingesetzt wird.

2. Verfahren nach Anspruch 1, **dadurch gekennzeichnet, dass** als Diisocyanat I Tetramethylendiisocyanat, Hexamethylendiisocyanat, Dodecyldiisocyanat, 1,3-und 1,4-Bis(isocyanatomethyl)cyclohexan, Xylylendiisocyanat, Tetramethylxylylendiisocyanat, 4,4'-Diphenylmethandiisocyanat oder ein Gemisch daraus verwendet wird.

3. Verfahren nach Anspruch 1, **dadurch gekennzeichnet, dass** das Diisocyanat I ein Isocyanat mit zwei Isocyanatgruppen unterschiedlicher Reaktivität bei Erst- und Zweitaddition ist und aus 2,4-Toluylendiisocyanat, 2,6-Toluylendiisocyanat, 2,4'-Diphenylmethandiisocyanat, 1,3- und 1,4-Phenylendiisocyanat, 1,5-Naphthylendiisocyanat. Tolidindiisocyanat, Diphenyldiisocyanat, Isophorondiisocyanat, 2-Butyl-2-ethylpentamethylen-diisocyanat, 2-Isocyanatopropylcyclohexylisocyanat, 3(4)-Isocyanatornethyl-1-methylcyclohexylisocyanat, 1,4-Diisocyanato-4-methylpentan, 4-Methylcyclohexan-1,3-diisocyanat, 2,4'-Methylenbis(cyclohexyl) diisocyanat oder aus deren Mischungen ausgewählt ist.

4. Verfahren nach einem der Ansprüche 1 bis 3, **dadurch gekennzeichnet, dass** das Di- oder Polyisocyanat II aus 2,4-Toluylendiisocyanat, 2,6-Toluylendiisocyanat, 4,4'-Diphenylmethandiisocyanat, 2,4'-Diphenylmethandiisocyanat, Mischungen aus Diphenylmethandiisocyanat und höherkemigen Homologen des Diphenylmethandiisocyanats (Polymer-MDI), 1,5-Naphthylendiisocyanat, Tolidindiisocyanat, 1,3- und 1,4-Phenylendiisocyanat, Diphenyldiisocyanat. Tetramethylendiisocyanat, Hexamethylendiisocyanat, Dodecyldiisocyanat, Lysinalkylester-diisocyanat, wobei Alkyl für C₁ bis C₁₀ steht, Isophorondiisocyanat, 2-Methylpentamethylendiisocyanat, 2,2,4- oder 2,4,4-Trimethyl-1,6-hexamethylendiisocyanat, 1,3- und 1,4-Diisocyanatocyclohexan, 3(4)-Isocyanatomethyl-1-methyl- 1-isocyanatocyclohexan, 2-Butyl-2-ethylpentamethylen-diisocyanat, 2-Isocyanatopropylcyclohexyl-isocyanat, 2- oder 4-Methylcyclohexan-1,3-diisocyanat, 4,4'- und 2,4'-Methylenbis(cyclohexyl)-diisocyanat, 1,3- oder 1,4-Bis(isocyanatomethyl)cyclohexan, Xylylendiisocyanat, Tetramethylxylylertdiisocyanat, 4-Isocyanatomethyl-1,8-octamethylendiisocyanat, Triisocyanatotoluol und Oligo- oder Polyisocyanaten aus den genannten Isocyanaten, die durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen hergestellt werden, oder aus den Mischungen der genannten Isocyanate ausgewählt ist.

5. Verfahren nach einem der Ansprüche 1 bis 4, **dadurch gekennzeichnet, dass** das Di- oder Polyisocyanat II eine mittlere Funktionalität von mehr als 2, vorzugsweise zwischen 2,1 und 5 aufweist.

6. Verfahren nach einem der Ansprüche 1 bis 5, **dadurch gekennzeichnet, dass** bei der Umsetzung des Additionsproduktes (A) und/oder des Polyadditionsprodukts (P) mit dem Di- oder Polyisocyanat II das Verhältnis von Isocyanatgruppen des Di- oder Polyisocyanats II zu den mit Isocyanat reaktiven Gruppen des Additionsproduktes (A) oder des Polyadditionsprodukts (P) so gewählt wird, dass mindestens 10 %, vorzugsweise mindestens 40 % der NCO-Gruppen des Di- oder Polyisocyanats II umgesetzt werden.

7. Verfahren nach einem der Ansprüche 1 bis 6, **dadurch gekennzeichnet, dass** die mit Isocyanat reaktiven Gruppen der Komponente (b) aus einer Hydroxylgruppe, einer Mercaptogruppe, einer Aminogruppe oder einem Gemisch davon ausgewählt sind.

8. Verfahren nach einem der Ansprüche 1 bis 7, **dadurch gekennzeichnet, dass** als (b) Verbindungen mit zwei mit Isocyanat reaktiven Gruppen 1,2-Propandiol, 1,2- und 1,3-Butandiol, Ethanolamin, Propanolamin, Mercaptoethanol, 4-Hydroxypiperidin und 1-Hydroxyethylpiperazin verwendet wird.

9. Polyisocyanate, herstellbar nach einem der Ansprüche 1 bis 8.

10. Polyisocyanate, herstellbar nach einem der Ansprüche 1 bis 8, **dadurch gekennzeichnet, dass** die Polyisocyanate sowohl aliphatisch als auch aromatisch gebundene Isocyanatgruppen aufweisen.

11. Verwendung der Polyisocyanate nach Anspruch 9 oder 10 zur Herstellung von Lacken, Überzügen, Klebstoffen, Dichtmassen, Gießelastomeren und/oder Schaumstoffen.

12. Polyadditionsprodukte, erhältlich unter Verwendung von Polyisocyanaten nach Anspruch 9 oder 10.

## Claims

1. A process for preparing polyisocyanates, which comprises
(i) preparation of an addition product (A) which comprises one group which is reactive toward isocyanate and one isocyanate group by reacting
(a) a diisocyanate I with
(b) compounds containing two groups which are reactive toward isocyanate,
where at least one of the components (a) or (b) has functional groups having differing reactivities toward the functional groups of the other component,
(ii) optionally, intermolecular addition reaction of the addition product (A) to form a polyaddition product (P) which comprises one group which is reactive toward isocyanate and one isocyanate group and
(iii) reaction of the addition product (A) and/or the polyaddition product (P) with a diisocyanate or polyisocyanate II, where diisocyanate I and diisocyanate or polyisocyanate II are different and aromatic isocyanate is used in combination with aliphatic isocyanate or cycloaliphatic isocyanate is used in combination with aliphatic isocyanate.

2. The process according to claim 1, wherein the diisocyanate I used is tetramethylene diisocyanate, hexamethylene diisocyanate, dodecyl diisocyanate, 1,3- or 1,4-bis(isocyanatomethyl)cyclohexane, xyxylene diisocyanate, tetramethylxylylene diisocyanate, diphenylmethane 4,4'-diisocyanate or a mixture thereof.

3. The process according to claim 1, wherein the diisocyanate I is an isocyanate having two isocyanate groups of differing reactivity in first and second addition and is selected from among tolylene 2,4-diisocyanate, tolylene 2,6-diisocyanate, diphenylmethane 2,4'-diisocyanate, phenylene 1,3- and 1,4-diisocyanate, naphthylene 1,5-diisocyanate, tolidine diisocyanate, biphenyl diisocyanate, isophorone diisocyanate, 2-butyl-2-ethylpentamethylene diisocyanate, 2-isocyanatopropylcyclohexyl isocyanate, 3(4)-isocyanatomethyl-1-methylcyclohexyl isocyanate, 1,4-diisocyanato-4-methylpentane, 4-methylcyclohexane 1,3-diisocyanate, dicyclohexylmethane 2,4'-diisocyanate and mixtures thereof.

4. The process according to any of claims 1 to 3, wherein the diisocyanate or polyisocyanate II is selected from among tolylene 2,4-diisocyanate, tolylene 2,6-diisocyanate, diphenylmethane 4,4'-diisocyanate, diphenylmethane 2,4'-diisocyanate, mixtures of diphenylmethane diisocyanate and higher homologues of diphenylmethane diisocyanate (polymeric MDI), naphthylene 1,5-diisocyanate, tolidine diisocyanate, phenylene 1,3- and 1,4-diisocyanate, biphenyl diisocyanate, tetramethylene diisocyanate, hexamethylene diisocyanate, dodecyl diisocyanate, lysine alkyl ester diisocyanate, where alkyl is C₁-C₁₀alkyl, isophorone diisocyanate, 2-methylpentamethylene diisocyanate, 2,2,4- and 2,4,4-trimethylhexamethylene 1,6-diisocyanate, 1,3- and 1,4-diisocyanatocyclohexane, 3(4)-isocyanatomethyl-1-methyl-1-isocyanatocyclohexane, 2-butyl-2-ethylpentamethylene diisocyanate, 2-isocyanatopropylcyclohexyl isocyanate, 2- and 4-methylcyclohexane 1,3-diisocyanate, dicyclohexylmethane 4,4'- and 2,4'-diisocyanate, 1,3- and 1,4-bis(isocyanatomethyl)cyclohexane, xylylene diisocyanate, tetramethylxylylene diisocyanate, 4-isocyanatomethyloctamethylene 1,8-diisocyanate, triisocyanatotoluene and oligoisocyanates or polyisocyanates prepared from the isocyanates listed by coupling by means of urethane, allophanate, urea, biuret, uretdione, amide, isocyanurate, carbodiimide, uretonimine, oxadiazinetrione or iminooxadiazinedione structures or from among mixtures of the isocyanates mentioned.

5. The process according to any of claims 1 to 4, wherein the diisocyanate or polyisocyanate II has a mean functionality of more than 2, preferably in the range from 2.1 to 5.

6. The process according to any of claims 1 to 5, wherein, in the reaction of the addition product (A) and/or the polyaddition product (P) with the diisocyanate or polyisocyanate II, the ratio of isocyanate groups of the diisocyanate or polyisocyanate II to the isocyanate-reactive groups of the addition product (A) or the polyaddition product (P) is selected so that at least 10%, preferably at least 40%, of the NCO groups of the diisocyanate or polyisocyanate II are reacted.

7. The process according to any of claims 1 to 6, wherein the isocyanate-reactive groups of the component (b) are selected from among hydroxyl groups, mercapto groups, amino groups and mixtures thereof.

8. The process according to any of claims 1 to 7, wherein the compounds (b) having two groups which are reactive toward isocyanate are 1,2-propanediol, 1,2- and 1,3-butanediol, ethanolamine, propanolamine, mercaptoethanol, 4-hydroxypiperidine and 1-hydroxyethylpiperazine.

9. A polyisocyanate which can be prepared according to any of claims 1 to 8.

10. A polyisocyanate which can be prepared according to any of claims 1 to 8 and has both aliphatically and aromatically bound isocyanate groups.

11. The use of a polyisocyanate according to claim 9 or 10 for producing paints and varnishes, coatings, adhesives, sealants, pourable elastomers and/or foams.

12. A polyaddition product obtainable using a polyisocyanate according to claim 9 or 10.

## Revendications

1. Procédé pour la préparation de polyisocyanates, comprenant
(i) la préparation d'un produit d'addition (A), qui contient un groupe réactif avec isocyanate et un groupe isocyanate, par transformation
(a) d'un diisocyanate I avec
(b) des composés présentant deux groupes réactifs avec isocyanate,
au moins un des composants (a) ou (b) présentant des groupes fonctionnels dotés d'une réactivité différente par rapport aux groupes fonctionnels de l'autre composant,
(ii) le cas échéant une réaction d'addition intermoléculaire du produit d'addition (A) en un produit de polyaddition (P), qui contient un groupe réactif avec isocyanate et un groupe isocyanate, et
(iii) la transformation du produit d'addition (A) et/ou du produit de polyaddition (P) avec un diisocyanate ou un polyisocyanate II,
le diisocyanate I et le diisocyanate ou le polyisocyanate II étant différents et en utilisant un isocyanate aromatique en combinaison avec un isocyanate aliphatique ou un isocyanate cycloaliphatique en combinaison avec un isocyanate aliphatique.

2. Procédé selon la revendication 1, **caractérisé en ce qu'**on utilise, comme diisocyanate I, le tétraméthylènediisocyanate, l'hexaméthylènediisocyanate, le dodécyldiisocyanate, le 1,3-bis(isocyanatométhyl)cyclohexane et le 1,4-bis(isocyanatométhyl)cyclohexane, le xylylènediisocyanate, le tétraméthylxylylènediisocyanate, le 4,4'-diphénylméthanediisocyanate ou un mélange de ceux-ci.

3. Procédé selon la revendication 1, **caractérisé en ce que** le diisocyanate I est un isocyanate présentant deux groupes isocyanate de réactivité différente lors de la première et de la deuxième addition et est choisi parmi le 2,4-toluylènediisocyanate, le 2,6-toluylènediisocyanate, le 2,4'-diphénylméthanediisocyanate, le 1,3-phénylènediisocyanate et le 1,4-phénylènediisocyanate, le 1,5-naphtylènediisocyanate, le toluidinediisocyanate, le diphényldiisocyanate, l'isophoronediisocyanate, le 2-butyl-2-éthylpentaméthylènediisocyanate, le 2-isocyanatopropylcyclohexylisocyanate, le 3(4)-isocyanatométhyl-1-méthylcyclchexylisocyanate, le 1,4-diisocyanato-4-méthylpentane, le 4-méthylcyclohexane-1,3-diisocyanate, le 2,4'-méthylènebis(cyclohexyl)-diisocyanate ou leurs mélanges.

4. Procédé selon l'une quelconque des revendications 1 à 3, **caractérisé en ce que** le diisocyanate ou le polyisocyanate II est choisi parmi le 2,4-toluylènediisocyanate, le 2,6-toluylènediisocyanate, le 4,4'-diphénylméthanediisocyanate, le 2,4'-diphénylméthanediisocyanate, les mélanges de diphénylméthanediisocyanate et d'homologues à nombre supérieur de noyaux du diphénylméthanediisocyanate (MDI polymère), le 1,5-naphtylènediisocyanate, le toluidinediisocyanate, le 1,3-phénylènedizsocyanate et le 1,4-phénylènediisocyanate, le diphényldiisocyanate, le tétraméthylènediisocyanate, l'hexaméthylènediisocyanate, le dodécyldiisocyanate, le diisocyanate de l'ester alkylique de la lysine, alkyle représentant alkyle en C₁ à C₁₀, l'isophoronediisocyanate, le 2-méthylpentaméthylènediisocyanate, le 2,2,4-triméthyl-1,6-hexaméthylènediisocyanate ou le 2,4,4-triméthyl-1,6-hexaméthylénediisocyanate, le 1,3-diisocyanatocyclohexane et le 1,4-diisocyanatocyclohexane, le 3(4)-isocyanatométhyl-1-méthyl-1-isocyanatocyclohexane, le 2-butyl-2-éthylpentaméthylènediisocyanate, le 2-isocyanatopropylcyclohexylisocyanate, le 2-méthylcyclohexane-1,3-diisocyanate ou le 4-méthylcyclohexane-1,3-diisocyanate, le 4,4'-méthylènebis(cyclohexyl)-diisocyanate et le 2,4'-méthylènebis(cyclohexyl)-diisocyanate, le 1,3-bis(isocyanatométhyl)cyclohexane ou le 1,4-bis(isocyanatométhyl)cyclohexane, le xylylènediisocyanate, le tétraméthylxylylènediisocyanate, le 4-isocyanatométhyl-1,8-octaméthylènediisocyanate, le triisocyanatotoluène et les oligocyanates ou les polyisocyanates des isocyanates mentionnés, qui sont préparés par liaison au moyen de structures de type uréthane, allophanate, urée, biuret, uretdione, amide, isocyanurate, carbodiimide, urétonimine, oxadiazinetrione ou iminooxadiazinedione ou parmi les mélanges des isocyanates mentionnés.

5. Procédé selon l'une quelconque des revendications 1 à 4, **caractérisé en ce que** le diisocyanate ou le polyisocyanate II présente une fonctionnalité supérieure à 2, de préférence entre 2,1 et 5.

6. Procédé selon l'une quelconque des revendications 1 à 5, **caractérisé en ce que** lors de la transformation du produit d'addition (A) et/ou du produit de polyaddition (P) avec le diisocyanate ou le polyisocyanate II, le rapport de groupes isocyanate du diisocyanate ou du polyisocyanate II aux groupes réactifs avec isocyanate du produit d'addition (A) ou du produit de polyaddition (P) est choisi de manière telle qu'au moins 10%, de préférence au moins 40% des groupes NCO du diisocyanate ou du polyisocyanate II sont transformés.

7. Procédé selon l'une quelconque des revendications 1 à 6, **caractérisé en ce que** les groupes réactifs avec isocyanate du composant (b) sont choisis parmi un groupe hydroxyle, un groupe mercapto, un groupe amino ou un mélange de ceux-ci.

8. Procédé selon l'une quelconque des revendications 1 à 7, **caractérisé en ce qu'**on utilise comme (b) composés présentant deux groupes réactifs avec isocyanate le 1,2-propanediol, le 1,2-butanediol et le 1,3-butanediol, l'éthanolamine, la propanolamine, le mercaptoéthanol, la 4-hydroxypipéridine et la 1-hydroxyéthylpipérazine.

9. Polyisocyanates, pouvant être préparés selon l'une quelconque des revendications 1 à 8.

10. Polyisocyanates, pouvant être préparés selon l'une quelconque des revendications 1 à 8, **caractérisés en ce que** les polyisocyanates présentent des groupes isocyanate liés aliphatiquement ainsi qu'aromatiquement.

11. Utilisation des polyisocyanates selon la revendication 9 ou 10 pour la préparation de laques, de revêtements, d'adhésifs, de masses d'étanchéité, d'élastomères coulés et/ou de mousses.

12. Produits de polyaddition pouvant être obtenus en utilisant des polyisocyanates selon la revendication 9 ou 10.
